# EUROPÄISCHE PATENTSCHRIFT

(11) **EP 3 268 162 B1**
(45) Veröffentlichungstag und Bekanntmachung des Hinweises auf die Patenterteilung: **07.08.2019**
(21) Anmeldenummer: 16706202.5
(22) Anmeldetag: 25.02.2016
(51) Int. Cl.: B23K 26/08, B23K 26/38, B23K 37/02, B23K 37/04, B23K 10/00, B26D 7/20

(54) **MASCHINE ZUM TRENNENDEN BEARBEITEN VON PLATTENFÖRMIGEN WERKSTÜCKEN**
MACHINE FOR CUTTING PANEL-TYPE WORKPIECES
MACHINE POUR SÉPARER PAR USINAGE DES PIÈCES EN FORME DE PLAQUES

(30) Priorität: 13.03.2015 DE 102015204562
(43) Veröffentlichungstag der Anmeldung: 17.01.2018
(73) Patentinhaber: Trumpf Werkzeugmaschinen GmbH + Co. KG, 71254 Ditzingen (DE)
(72) Erfinder: OTTNAD, Jens, 76199 Karlsruhe (DE)
(74) Vertreter: Kohler Schmid Möbus Patentanwälte
(86) Internationale Anmeldenummer: PCT/EP2016/053932
(87) Internationale Veröffentlichungsnummer: WO 2016/146358

(56) Entgegenhaltungen:
- WO-A1-2010/085486
- DE-A1-102011 051 170
- JP-A- S61 206 586

## Beschreibung

Die vorliegende Erfindung betrifft eine Maschine, insbesondere eine Laserbearbeitungsmaschine, zum trennenden Bearbeiten eines plattenförmigen, typischer Weise metallischen Werkstücks (eines Blechs) mittels eines Bearbeitungsstrahls, insbesondere mittels eines Laserstrahls, mit: einer ersten Bewegungseinrichtung zur Bewegung des Werkstücks in einer ersten Richtung, einer zweiten Bewegungseinrichtung zur Bewegung eines den Bearbeitungsstrahl auf das Werkstück ausrichtenden Bearbeitungskopfs in einer zweiten, insbesondere zur ersten senkrechten Richtung, sowie zwei fest stehende Werkstückauflageflächen zur Auflage des Werkstücks, zwischen denen ein Spalt für den Durchtritt des Bearbeitungsstrahls gebildet ist.

Eine solche Maschine zum trennenden Bearbeiten von plattenförmigen Werkstücken mittels eines Laserstrahls in Form einer kombinierten Laser- und Stanzmaschine ist aus der JP 5050346A bekannt geworden. An einer derartigen Maschine mit hybrider Bewegungsführung, bei der das Werkstück in einer ersten Richtung (X-Richtung) und der Bearbeitungskopf in einer zweiten Richtung (Y-Richtung) bewegt werden, ist zur Vermeidung von Beschädigungen durch den Bearbeitungsstrahl die Werkstückauflage im Verfahrbereich des Bearbeitungskopfs unterbrochen. In der Werkstückauflage erstreckt sich somit zwischen zwei Werkstückauflageflächen bzw. Werkstückauflagen ein Spalt in Y-Richtung. Durch diesen Spalt werden der durch das Werkstück hindurch getretene Bearbeitungsstrahl sowie anfallende Schlacke und Schneidbutzen abgeführt. Bei dem Bearbeitungsstrahl kann es sich um einen Laserstrahl handeln, aber auch die Verwendung einer anderen Art von Hochenergiestrahl, beispielsweise in Form eines Plasmalichtbogens, oder eines Wasserstrahls ist möglich.

In der WO 2010/085486 A1 ist ein Laser-Formschneidsystem beschrieben, das eine erste Reihe von Förderbahnen mit einer Mehrzahl von parallel zueinander angeordneten, voneinander beabstandeten Unterstützungsbändern sowie eine zweite Reihe von Förderbahnen aufweist, die ebenfalls eine Mehrzahl von parallel zueinander angeordneten, voneinander beabstandeten Unterstützungsbändern aufweist. Die zweite Reihe ist in einer Förderrichtung des Materials, das von einer Rolle gefördert wird, stromabwärts von der ersten Reihe angeordnet, wobei zwischen den beiden Reihen ein Spalt gebildet ist. Benachbart zu einer Längskante der ersten und zweiten Reihe ist ein in Querrichtung bewegbarer Laserbearbeitungskopf gelagert.

Bei einer derartigen Maschine zielen alle Bemühungen darauf ab, den für den Durchtritt des Bearbeitungsstrahls benötigten Spalt so klein wie möglich zu halten, um die bestmögliche Werkstück-Unterstützung zu gewährleisten. Für den Fall, dass eine solche (Laser-)Bearbeitungsmaschine eine Zusatzachse zur Bewegung des Bearbeitungskopfs in X-Richtung aufweisen soll, ist es jedoch erforderlich, dass der Spalt eine Mindestbreite aufweist, die zumindest dem Verfahrbereich des Bearbeitungskopfs in X-Richtung entspricht.

Unabhängig von der Breite des Spalts kann es an den Seitenkanten der Werkstückauflagen, welche den Spalt begrenzen, potenziell zu Kollisionen mit herunterhängenden Werkstückteilen kommen. Beispielsweise kann es während der Bearbeitung oder auch beim Freischnitt vorkommen, dass ein geschnittenes Werkstückteil oder einzelne Konturabschnitte des Werkstückteils nur von einer der Werkstückauflagen unterstützt werden. Insbesondere beim Freischnitt kann dies durch das Einwirken des Schneidgasdrucks auf das freigeschnittene Werkstückteil zu Einschränkungen der Prozesssicherheit führen, da das freigeschnittene Werkstückteil in den Spalt hinein kippen kann. Außerdem kann es bei langen, dünnen Werkstückteilen dazu kommen, dass sich das Werkstückteil in den Spalt hinein durchbiegt.

### Aufgabe der Erfindung

Der vorliegenden Erfindung stellt sich die Aufgabe, eine Maschine zur trennenden Bearbeitung plattenförmiger Werkstücke, insbesondere eine Laserbearbeitungsmaschine, bereitzustellen, die eine verbesserte Unterstützung von Werkstückteilen während der trennenden Bearbeitung ermöglicht.

### Gegenstand der Erfindung

Diese Aufgabe wird gelöst durch eine Maschine der eingangs genannten Art, bei der zwischen den zwei feststehenden Werkstückauflageflächen mindestens zwei insbesondere unabhängig voneinander (gesteuert) verfahrbare Unterstützungsschlitten angeordnet sind, die jeweils eine Werkstückauflagefläche zur Unterstützung von beim trennenden Bearbeiten geschnittenen Werkstückteilen aufweisen, wobei die einander gegenüber liegenden, einander zugewandten Seitenkanten der Werkstückauflageflächen der Unterstützungsschlitten nicht rechtwinklig und nicht parallel zur ersten Bewegungsrichtung ausgerichtet sind.

Zwischen den feststehenden Werkstückauflageflächen der Maschine sind die mindestens zwei Unterstützungsschlitten angeordnet, deren Werkstückauflageflächen sich typischer Weise zwischen den fest stehenden Werkstückauflageflächen annähernd über die gesamte Breite des Spalts erstrecken. Die Unterstützungsschlitten sind parallel zu den Seitenkanten der fest stehenden Werkstückauflageflächen verfahrbar und bilden eine seitliche Begrenzung des Spalts. Die beiden Unterstützungsschlitten können unabhängig voneinander verfahren werden, es ist aber auch eine gekoppelte Bewegung möglich, bei welcher beide Unterstützungsschlitten synchron, d.h. mit konstantem relativen Abstand, parallel zu den Seitenkanten der fest stehenden Werkstückauflageflächen verfahren werden. Der Bereich zwischen den Werkstückauflageflächen der Unterstützungsschlitten bildet den eigentlichen Schneidbereich, d.h. den Spalt. Der Spalt, durch den der Bearbeitungsstrahl hindurch tritt, wird somit nicht nur von den einander zugewandten Seitenkanten der fest stehenden Werkstückauflageflächen, sondern auch von den einander zugewandten Seitenkanten der beweglichen Werkstückauflageflächen der Unterstützungsschlitten begrenzt.

Der zwischen den Unterstützungsschlitten gebildete Spalt sollte möglichst klein sein, um geschnittene Werkstückteile zu unterstützen, andererseits sollte auch gewährleistet sein, dass beim Schneidprozess entstehende Schlacke die an den Spalt angrenzenden Werkstückauflageflächen nicht verschmutzt. Durch die unabhängige Verfahrbarkeit der Unterstützungsschlitten ist der Schneidbereich bzw. Spalt in seiner Ausdehnung variabel, so dass seine Ausdehnung an die jeweilige Schneidaufgabe angepasst werden kann. Der Schneidbereich bzw. der Spalt kann zudem entlang der Seitenkanten der feststehenden Werkstückauflageflächen an unterschiedlichen Orten positioniert werden.

Bei den plattenförmigen Werkstücken, die mit Hilfe der Maschine trennend bearbeitet werden, handelt es sich in der Regel um rechteckige oder ggf. um quadratische Zuschnitte, deren Außenkanten parallel bzw. rechtwinklig zueinander ausgerichtet sind. Die Bewegung des Werkstücks entlang der ersten Richtung erfolgt bei der hier beschriebenen Maschine typischer Weise parallel zu einer Außenkante eines solchen rechteckigen oder quadratischen plattenförmigen Werkstücks. Auch die Maschine selbst weist typischer Weise Außenkanten auf, die parallel bzw. senkrecht zu den Außenkanten des rechteckigen oder quadratischen zu bearbeitenden Werkstücks ausgerichtet sind.

Im Sinne dieser Anmeldung wird unter einer Bewegung, die von einer jeweiligen Bewegungseinrichtung in einer zugehörigen Richtung ermöglicht wird, eine bidirektionale Bewegung (Hin-und-Her-Bewegung) verstanden, d.h. sowohl eine Bewegung in positiver als auch in negativer Richtung. Beispielsweise ist die erste Bewegungseinrichtung zur bidirektionalen Bewegung des Werkstücks in der ersten Richtung (X-Richtung) ausgebildet, d.h. zur Bewegung des Werkstücks sowohl in positiver als auch in negativer X-Richtung. Entsprechend ist auch die zweite Bewegungseinrichtung zur bidirektionalen Bewegung des Bearbeitungskopfs in der zweiten, insbesondere zur ersten senkrechten Richtung (Y-Richtung) ausgebildet, d.h. zur Bewegung des Bearbeitungskopfs sowohl in positiver als auch in negativer Y-Richtung.

Der Bearbeitungskopf ist bevorzugt ausgebildet, den Bearbeitungsstrahl entlang einer dritten, zur ersten und zweiten senkrechten Richtung (Z-Richtung) auf das Werkstück auszurichten. Die Maschine weist typischer Weise eine weitere Bewegungseinrichtung auf, um den Bearbeitungskopf bidirektional in der dritten Richtung zu bewegen, d.h. sowohl in positiver als auch in negativer Z-Richtung. Die Bewegung des Bearbeitungskopfs in Z-Richtung dient dazu, den Abstand zwischen dem Werkstück und dem Bearbeitungskopf in Z-Richtung einzustellen.

Die Erfindung macht sich den Umstand zu Nutze, dass ein Großteil der auf einer solchen Maschine zum schneidenden Bearbeiten von plattenförmigen Werkstücken, beispielsweise einer Laserflachbettmaschine, gefertigten Werkstückteile ungefähr rechtwinklige Außenmaße sowie eine ungefähre Ausrichtung ihrer Innenkonturen im 0°- oder 90°-Winkel zu den jeweiligen Außenkanten des rechteckigen oder quadratischen plattenförmigen Werkstücks aufweisen. Eine abweichende Ausrichtung, beispielsweise eine Verdrehung, von einander gegenüber liegenden Seitenkanten von zwei oder mehr der Werkstückauflageflächen in Relation zur üblichen Lage der auf der Maschine gefertigten Werkstückteile reduziert daher die Auftrittshäufigkeit von in den Spalt hängenden Werkstückbereichen z.B. in Form von Blechzungen erheblich. Bei der hier beschriebenen erfindungsgemäßen Maschine sind lediglich Werkstückbereiche mit länglichen, schmalen Konturen, die im Wesentlichen im selben Winkel zu den nicht parallel oder senkrecht zur ersten Richtung ausgerichteten Seitenkanten der Werkstückauflageflächen verlaufen, gefährdet, in den Spalt hineinzuhängen und ggf. Kollisionen zu verursachen.

Bei einer Ausführungsform sind die einander gegenüber liegenden Seitenkanten an den zwei fest stehenden Werkstückauflageflächen nicht rechtwinklig und nicht parallel zur ersten Richtung ausgerichtet. In diesem Fall handelt es sich bei den Werkstückauflageflächen beispielsweise um zwei (feststehende) Werkstückauflagetische, zwischen denen der Spalt für den Durchtritt des Bearbeitungsstrahls gebildet ist. Der Spalt erstreckt sich in diesem Fall typischer Weise über die gesamte Breite der Werkstückauflagetische (entlang der Y-Richtung), verläuft aber nicht rechtwinklig zur X-Richtung, d.h. der Spalt ist sowohl unter einem Winkel zur X-Richtung als auch zur Y-Richtung ausgerichtet. Die einander gegenüber liegenden Seitenkanten der fest stehenden Werkstückauflageflächen sind bevorzugt parallel zueinander ausgerichtet und weisen einen konstanten Abstand zueinander auf, d.h. der Spalt weist eine konstante Breite auf. Die einander gegenüber liegenden Seitenkanten der Werkstückauflageflächen können alternativ beispielsweise eine bogenförmige Geometrie oder einen variablen Abstand aufweisen.

Unter einer Werkstückauflagefläche wird im Sinne dieser Anmeldung eine Werkstückauflage verstanden, die geeignet ist, das plattenförmige Werkstück flächig zu unterstützen. Eine solche Werkstückauflagefläche muss keine durchgehende Fläche bilden, es genügt vielmehr, wenn das Werkstück an mehreren (mindestens drei, in der Regel deutlich mehr) Stellen durch Auflageelemente (ggf. nur punktuell) unterstützt wird, um das Werkstück in einer Auflageebene zu lagern. Die Werkstückauflagefläche wird in diesem Fall von den Oberseiten der Auflageelemente gebildet. Die fest stehenden Werkstückauflageflächen, zwischen denen der Spalt gebildet ist, können beispielsweise in Form eines Bürsten- oder Kugeltisches ausgebildet sein. Das zu bearbeitende Werkstück wird in diesem Fall während der Bearbeitung durch viele auf bzw. in einer Tischfläche angeordnete Auflageelemente in Form von Bürsten oder (drehbaren) Kugeln gestützt, die zusammen die Werkstückauflagefläche bilden. Alternativ können drehbare Rollen als Auflageelemente zur Bildung von Werkstückauflageflächen vorgesehen sein. Außerdem ist es möglich, die Werkstückauflageflächen als umlaufende Auflagebänder zu gestalten.

Bei einer Ausführungsform sind die Seitenkanten der zwei fest stehenden Werkstückauflageflächen unter einem Winkel zur zweiten Richtung ausgerichtet, insbesondere dann, wenn die zweite Richtung parallel zur Y-Richtung, d.h. senkrecht zur ersten Richtung verläuft. Alternativ können die Seitenkanten der feststehenden Werkstückauflageflächen und die zweite Richtung parallel zueinander und nicht senkrecht zur ersten Richtung verlaufen. In diesem Fall kann ggf. ein fest stehendes Portal, an dem eine Bewegungseinrichtung in Form eines Schlittens für das gesteuerte Verfahren den Bearbeitungskopfs angebracht ist, parallel zur Richtung des Spalts ausgerichtet sein. Der Winkel zur zweiten Richtung kann zwischen 0° und 45°, vorzugsweise zwischen 20° und 40°, besser zwischen 25° und 35°, betragen.

Bei einer Ausführungsform weist die Maschine eine zusätzliche Bewegungseinrichtung (Zusatzachse) zur Bewegung des Bearbeitungskopfs in der ersten Richtung (X-Richtung) auf. Die zusätzliche Bewegungseinrichtung ist ausgebildet, den Bearbeitungskopf bidirektional in der ersten Richtung zu bewegen, d.h. sowohl in positiver als auch in negativer X-Richtung. Dies ist insbesondere von Vorteil, wenn die Seitenkanten der fest stehenden Werkstückauflageflächen nicht parallel zur zweiten Richtung verlaufen. In diesem Fall kann der Verfahrbereich des Bearbeitungskopfs in X-Richtung (d.h. der Verfahrbereich der Zusatzachse) idealer Weise der gesamten Erstreckung des Spalts in X-Richtung entsprechen, damit das Werkstück an jeder beliebigen Position zwischen den beiden fest stehenden Werkstückauflageflächen trennend bearbeitet werden kann, ohne dass die den Bearbeitungskopf tragende Maschinenkomponente (üblicherweise ein Portal) verfahren werden muss. Aufgrund der geringeren zu beschleunigenden Massen ist die Zusatzachsbewegung des Bearbeitungskopfs in X-Richtung dynamischer als die Bewegung des Werkstücks in X-Richtung, so dass sich vor allem kleine Konturen sehr viel schneller mit der Achsbewegung der Zusatzachse - ggf. in Kombination mit der Bewegung des Werkstücks in X-Richtung - realisieren lassen.

Typischer Weise sind die Unterstützungsschlitten unabhängig vom Bearbeitungskopf in einer Richtung verfahrbar, die parallel zu der Richtung verläuft, entlang derer die Seitenkanten der fest stehenden Werkstückauflageflächen verlaufen. Diese Richtung kann unter einem Winkel zur Y-Richtung verlaufen (s.o.), es ist aber auch möglich, dass diese Richtung parallel zur Y-Richtung verläuft (s.u.). Für eine unabhängige Bewegung der Unterstützungsschlitten und des Bearbeitungskopfs in dem Spalt werden typischer Weise unterschiedliche Antriebe verwendet, die es ermöglichen, jeden der Unterstützungsschlitten und den Bearbeitungskopf unabhängig voneinander an unterschiedliche Positionen zu verfahren.

Auch die Unterstützungsschlitten können auf ihrer dem Werkstück zugewandten Seite eine durchgehende Werkstückauflagefläche aufweisen, die zur Anlage an die Werkstückunterseite gebracht werden kann. Alternativ können die Unterstützungsschlitten mehrere Auflageelemente z.B. in Form von Auflagespitzen (Pins), Kugeln, Bürsten oder Stegen aufweisen, die gemeinsam die Werkstückauflagefläche bilden, auf der das Werkstück bzw. freigeschnittene Werkstückteile aufliegen können. Zusätzlich zu den zwei Unterstützungsschlitten, zwischen denen die schneidende Bearbeitung mittels des Bearbeitungskopfs stattfindet, können zwischen den fest stehenden Werkstückauflageflächen außerhalb des Spalts weitere Unterstützungselemente, beispielsweise in Form von weiteren verfahrbaren Unterstützungsschlitten, angeordnet sein, die eine bessere Unterstützung des Werkstücks auch in größerer Entfernung vom Bearbeitungskopf ermöglichen.

Für den Fall, dass die einander gegenüber liegenden Seitenkanten der fest stehenden Werkstückauflageflächen nicht rechtwinklig und nicht parallel zur ersten Richtung und somit zu den Außenkanten des Werkstücks ausgerichtet sind, können die beiden Unterstützungsschlitten bzw. deren Werkstückauflageflächen eine einfache quadratische oder rechteckige Geometrie aufweisen, da die einander gegenüber liegenden Seitenkanten der Unterstützungsschlitten durch die Anordnung der Unterstützungsschlitten im schräg zu den Werkstückaußenkanten ausgerichteten Spalt ebenfalls schräg ausgerichtet sind. In diesem Fall ist es allerdings erforderlich, auch den Bearbeitungskopf schräg zu den Werkstückaußenkanten (d.h. schräg bzw. unter einem Winkel zur X-Richtung bzw. zur Y-Richtung) zu bewegen, was höhere Anforderungen an die Konturprogrammierung stellt als dies bei parallel zur Y-Richtung ausgerichteten Seitenkanten der fest stehenden Werkstückauflageflächen der Fall ist.

Bei einer weiteren Ausführungsform sind die Seitenkanten der zwei fest stehenden Werkstückauflageflächen rechtwinklig zur ersten Richtung und somit parallel zu den Außenkanten des Werkstücks ausgerichtet. In diesem Fall ist die Bewegungseinrichtung zur Bewegung des Bearbeitungskopfs in der ersten Richtung (mittels Zusatzachse) entlang eines Verfahrbereichs ausgebildet, der typischer Weise der Erstreckung des Spalts in X-Richtung entspricht. Durch die Ausrichtung der einander gegenüber liegenden Seitenkanten der fest stehenden Werkstückauflagen senkrecht zur ersten Richtung wird die Konturprogrammierung vereinfacht. Um die nicht rechtwinklige und nicht parallele Ausrichtung der Seitenkanten der Werkstückauflageflächen der Unterstützungsschlitten zu realisieren, ist es in diesem Fall erforderlich, dass die Unterstützungsschlitten bzw. deren Werkstückauflageflächen eine von einer quadratischen oder rechteckigen Geometrie abweichende Form aufweisen.

Bei einer Weiterbildung verlaufen die einander gegenüber liegenden bzw. einander zugewandten Seitenkanten der Werkstückauflageflächen der beiden Unterstützungsschlitten geradlinig und unter einem Winkel zur ersten Richtung. Bei dieser Weiterbildung können die beiden Unterstützungsschlitten bzw. deren Werkstückauflageflächen beispielsweise trapezförmig, insbesondere in der Art eines rechtwinkligen Trapezes, ausgebildet sein. Bei einem solchen Unterstützungsschlitten bzw. einer Werkstückauflageflächen in Form eines rechtwinkligen Trapezes verläuft eine dem Spalt abgewandte Seitenkante (Schenkel) rechtwinklig zu den Grundseiten, die parallel zu den Seitenkanten der fest stehenden Werkstückauflageflächen ausgerichtet sind.

Bei einer Weiterbildung verlaufen die einander zugewandten Seitenkanten der Werkstückauflageflächen der beiden Unterstützungsschlitten unter einem Winkel zwischen 20° und 40° zur ersten Richtung. Die typischer Weise parallel ausgerichteten und unter einem Winkel zur ersten Richtung (X-Richtung) verlaufenden Seitenkanten der Unterstützungsschlitten bewirken, dass bei einer Bewegung des Bearbeitungskopfs in X-Richtung die Unterstützungsschlitten in Y-Richtung verfahren müssen, damit die Position des zwischen den Unterstützungsschlitten liegenden Spalts der Bewegung des Bearbeitungskopfs folgt. Bei der Ansteuerung der Unterstützungsschlitten ist es daher erforderlich, in transformierter Form die Position des so genannten "Tool Center Points", welcher der Bearbeitungsposition entspricht und welcher aus der Bewegung des Werkstücks in X-Richtung und der Zusatzachse für die Bewegung des Bearbeitungskopfs in X-Richtung resultiert, zu berücksichtigen. Der notwendige Verfahrweg der Unterstützungsschlitten in Y-Richtung wird hierbei umso größer, je größer der Winkel (zwischen 0° und 45°) zwischen den einander gegenüber liegenden Seitenkanten der Werkstückauflageflächen der Unterstützungsschlitten und der ersten Richtung (X-Richtung) ist. Die Prozesssicherheit, d.h. die Sicherheit, dass ein beliebig geformtes Werkstückteil beim Schneiden der Kontur immer von beiden Unterstützungsschlitten unterstützt wird, nimmt dagegen mit zunehmendem Winkel zu. Ein guter Kompromiss zwischen Unterstützungswirkung und benötigter Dynamik für die Bewegung der Unterstützungsschlitten in Y-Richtung wird bei einem Winkel zwischen 20° und 40°, besser zwischen 25° und 35°und insbesondere bei einem Winkel von 30° erreicht.

Bei einer weiteren Ausführungsform weisen die einander zugewandten Seitenkanten der Werkstückauflageflächen der beiden Unterstützungsschlitten keine geraden (linearen), sondern bogenförmige Seitenkanten auf. Unter einer bogenförmigen Seitenkante wird eine Seitenkante verstanden, die zumindest entlang eines Teilbereichs ihrer Erstreckung von einer geraden Linie abweicht. Eine solche bogenförmige Seitenkante kann eine oder mehrere bogenförmige Abschnitte mit ggf. unterschiedlicher (auch gegenläufiger) Krümmung aufweisen. Die beiden bogenförmigen Seitenkanten der Werkstückauflageflächen der beiden Unterstützungsschlitten sind typischer Weise komplementär zueinander ausgebildet, d.h. wenn die beiden Unterstützungsschlitten benachbart zueinander angeordnet werden, berühren sich die einander gegenüber liegenden Seitenkanten und der Spalt wird geschlossen.

Durch die bogenförmigen Seitenkanten kann die Parallelität zwischen den Seitenkanten der Unterstützungsschlitten und den Außen- oder Innenkonturen der geschnittenen Werkstückteile weiter reduziert werden. Zudem wird die Gefahr verringert, dass Abschnitte dieser Werkstückteile in den Spalt zwischen den Unterstützungsschlitten herabhängen können. Durch die bogenförmigen Seitenkanten nimmt jedoch die Komplexität bei der Ansteuerung der Verfahrbewegung der Unterstützungsschlitten zu.

Bei einer weiteren Ausführungsform weist mindestens eine der einander gegenüber liegenden Seitenkanten der Werkstückauflageflächen der Unterstützungsschlitten eine Fase oder eine Rundung auf. Mit Hilfe der Fase oder der Rundung können Kollisionen der Unterstützungsschlitten mit herabhängenden Werkstückteilen noch wirksamer verhindert werden, da die Kanten der Werkstückteile entlang der Fase bzw. Rundung nach oben gleiten, so dass diese zur Werkstückauflageebene bzw. zu den Werkstückauflageflächen gelangen.

Bei einer weiteren Ausführungsform verjüngt sich mindestens ein Unterstützungsschlitten entlang seiner der Werkstückauflagefläche abgewandten Unterseite zu der Seitenkante der Werkstückauflagefläche hin, die der gegenüber liegenden Seitenkante des anderen Unterstützungsschlittens zugewandt ist. Der Unterstützungsschlitten kann unterhalb der Werkstückauflagefläche bzw. entlang seiner Unterseite beispielsweise einen schräg verlaufenden Rücksprung bzw. eine Fase aufweisen, so dass die Dicke des Unterstützungsschlittens mit zunehmendem Abstand zur Seitenkante zunimmt, so dass der Unterstützungsschlitten an der Seitenkante, welche den Spalt begrenzt, eine möglichst geringe Dicke aufweist. Auf diese Weise kann erreicht werden, dass ein möglichst geringer Anteil von während des trennenden bzw. schneidenden Bearbeitens gebildeter Schlacke an dem Unterstützungsschlitten anhaftet.

Bei einer weiteren Ausführungsform ist die Werkstückauflagefläche mindestens eines Unterstützungsschlittens an der Seitenkante der Werkstückauflagefläche aus einem metallischen Material, insbesondere aus Kupfer, gebildet. Die Teilbereiche der Werkstückauflageflächen, die den Spalt begrenzen, sind idealer Weise aus Kupfer gefertigt, da Kupfer eine gute Leitfähigkeit aufweist und die beim Schneiden von Stahl und Aluminium gebildete Schlacke an Kupfer nicht gut haftet. Um die Seitenkante der Werkstückauflagefläche mit einem metallischen Material zu versehen, kann an dem Unterstützungsschiitten im Bereich der Seitenkante eine Metallplatte, beispielsweise ein Kupferblech, angebracht werden, welches eine Geometrie aufweist, die an die Geometrie des Unterstützungsschlittens angepasst ist. Eine solche Metallplatte kann austauschbar sein, d.h. über eine lösbare Verbindung, z.B. durch Verschrauben, an dem Unterstützungsschlitten befestigt sein.

Bei einer weiteren Ausführungsform der Maschine weist die Werkstückauflagefläche mindestens eines Unterstützungsschlittens einen plattenförmigen Teilbereich auf, an dem die Seitenkante der Werkstückauflagefläche gebildet ist. Bei dem plattenförmigen Teilbereich kann es sich beispielsweise um einen plattenförmigen Abschnitt einer Metallplatte, z.B. einer Kupferplatte. handeln, welche im Bereich der Seitenkante an dem Unterstützungsschlitten befestigt ist. Der plattenförmige Teilbereich ermöglicht es, eine Distanz zwischen der Seitenkante und dem restlichen Unterstützungsschlitten und somit eine Distanz zu dem Spalt zu schaffen, an dem die trennende Bearbeitung mittels des Bearbeitungsstrahls erfolgt.

Bei einer weiteren Ausführungsform weist die Werkstückauflagefläche des mindestens einen Unterstützungsschlittens einen Teilbereich auf, der als Riffelblech ausgebildet ist. Das Riffelblech kann sich unmittelbar an den plattenförmigen Teilbereich anschließen, der beispielsweise aus einem Blech, insbesondere einem Kupferblech, gebildet ist. Ein Riffelblech bildet eine stabile Werkstückauflagefläche mit guten Gleiteigenschaften für das Werkstück.

Mindestens ein Unterstützungsschlitten kann eine Werkstückauflagefläche aufweisen, die einen (weiteren) Teilbereich aufweist, der als Bürstenauflage ausgebildet ist. Die Bürstenauflage kann sich an die metallische Seitenkante bzw. den plattenförmigen Teilbereich oder ggf. an das Riffelblech anschließen. Die Bürstenauflage unterstützt das aufliegende Werkstück bzw. Werkstückteil kratzerfrei. Der plattenförmige Teilbereich des Unterstützungsschlittens und/oder das Riffelblech kann/können als Schranke zwischen dem Bearbeitungsstrahl und der Bürstenauflage dienen, um eine Beschädigung der Bürsten durch Funkenflug zu verhindern.

Die Werkzeugmaschine umfasst typischer Weise eine Steuerungseinrichtung, welche ausgebildet bzw. programmiert ist, mindestens einen der Unterstützungsschlitten, insbesondere genau zwei der Unterstützungsschlitten unter einem beim trennenden Bearbeiten freizuschneidenden Werkstückteil zu positionieren. Bei dem Werkstückteil handelt es sich typischer Weise um ein kippgefährdetes Werkstückteil, welches in einem zwischen den beiden Unterstützungsschlitten gebildeten Spalt vom Restwerkstück freigeschnitten wird. Das vollständig freigeschnittene Werkstückteil liegt nach dem Freischneiden zumindest teilweise auf der bzw. idealer Weise auf den Werkstückauflageflächen eines oder beider Unterstützungsschlitten derart auf, dass die Werkstückauflageflächen das Werkstückteil an einer durch den Schneidgasdruck (oder Wasserdruck) verursachten Kippbewegung hindern.

Die Steuerungseinrichtung dient zum gesteuerten Verfahren der Unterstützungsschlitten parallel zu den Seitenkanten der fest stehenden Werkstückauflageflächen. Die Positionierung der Unterstützungsschlitten kann synchron mit der Bewegung des Bearbeitungskopfs in Y-Richtung sowie ggf. in X-Richtung erfolgen. Die Bewegung der Unterstützungsschlitten kann aber auch unabhängig von der Bewegung des Bearbeitungskopfs in Y-Richtung erfolgen. Auf diese Weise können die Unterstützungsschlitten, falls diese z.B. beim Schneiden großer Werkstückteile nicht benötigt werden, von der Bearbeitungsposition, an welcher der Bearbeitungsstrahl positioniert ist, beabstandet angeordnet werden und beispielsweise in eine Parkposition außerhalb des Verfahrbereichs des Bearbeitungskopfs verbracht werden. Werden die Unterstützungsschlitten zur Unterstützung von kippgefährdeten Werkstückteilen benötigt, können diese aneinander angrenzend benachbart zur Bearbeitungsposition angeordnet werden.

Weitere Vorteile der Erfindung ergeben sich aus der Beschreibung und der Zeichnung. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1a,b: Darstellungen einer Laserbearbeitungsmaschine mit zwei fest stehenden Werkstückauflageflächen, deren einander gegenüber liegende Seitenkanten unter einem Winkel zu einer ersten Richtung (X-Richtung) ausgerichtet sind, entlang derer ein schneidend zu bearbeitendes Werkstück bewegt wird,
- Fig. 2: eine Darstellung eines Details einer Maschine analog zu Fig. 1a,b, bei der in einem zwischen den beiden fest stehenden Werkstückauflageflächen gebildeten Spalt zwei unabhängig voneinander verfahrbare Unterstützungsschlitten angeordnet sind,
- Fig. 3a,b: Darstellungen von zwei Unterstützungsschlitten, deren einander gegenüber liegende Seitenkanten parallel zur X-Richtung ausgerichtet sind, beim Freischneiden von zwei Werkstückteilen,
- Fig. 4a,b: Darstellungen einer Laserbearbeitungsmaschine mit zwei fest stehenden Werkstückauflageflächen, deren Seitenkanten rechtwinklig zur X-Richtung ausgerichtet sind und zwischen denen zwei verfahrbare Unterstützungsschlitten angeordnet sind, deren einander zugewandte Seitenkanten unter einem Winkel zur X-Richtung ausgerichtet sind,
- Fig. 5: eine Darstellung von zwei Unterstützungsschlitten, deren einander zugewandte Seitenkanten bogenförmig verlaufen,
- Fig. 6: ein Diagramm, welches den Aufwand und den Nutzen der schrägen Ausrichtung der Seitenkanten der beiden Unterstützungsschlitten in Abhängigkeit vom Winkel zur X-Richtung zeigt,
- Fig. 7a,b: Darstellungen von zwei Unterstützungsschlitten, deren einander gegenüber liegenden Seitenkanten eine Rundung bzw. eine Fase aufweisen, sowie
- Fig. 8a,b: Darstellungen eines Unterstützungsschlittens, dessen Werkstückauflagefläche drei unterschiedlich ausgebildete Teilbereiche aufweist.

In der folgenden Beschreibung der Zeichnungen werden für gleiche bzw. für funktionsgleiche Bauteile identische Bezugszeichen verwendet.

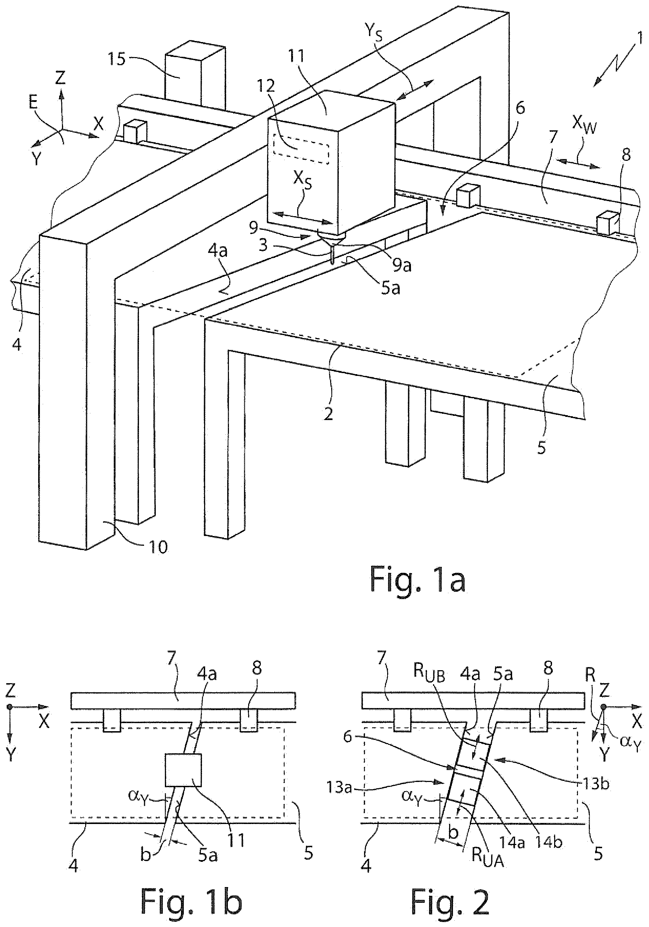

**Fig. 1a,b** zeigen einen beispielhaften Aufbau einer Maschine 1 zur Laserbearbeitung, genauer gesagt zum Laserschneiden, eines gestrichelt dargestellten plattenförmigen Werkstücks 2 mittels eines Laserstrahls 3. Zur schneidenden Bearbeitung des Werkstücks 2 kann an Stelle des Laserstrahls 3 auch eine andere Art von thermischem Bearbeitungsstrahl, beispielsweise eine Plasmafackel, oder ein Wasserstrahl eingesetzt werden. Das Werkstück 2 liegt bei der Bearbeitung auf zwei fest stehenden Werkstückauflageflächen 4, 5 auf, die im gezeigten Beispiel die Oberseiten von zwei Werkstücktischen bilden und eine Auflageebene E (X-Y-Ebene eines XYZ-Koordinatensystems) zur Auflage des Werkstücks 2 definieren Die Werkstückauflageflächen 4, 5 können durch Tischflächen oder durch stiftförmige Auflageelemente (Pins), Auflagebänder, Bürsten, Rollen, Kugeln, Luftpolster o.ä. gebildet werden.

Mittels einer herkömmlichen Bewegungs- und Halteeinrichtung 7, welche einen Antrieb sowie Klemmeneinrichtungen 8 in Form von Spannpratzen zum Festhalten des Werkstücks 2 aufweist, kann das Werkstück 2 auf den Werkstückauflageflächen 4, 5 in einer ersten Richtung X (im Folgenden: X-Richtung) gesteuert verschoben und an eine vorgegebene Werkstückposition X_{W} bewegt werden. Um die Bewegung des Werkstücks 2 in X-Richtung zu erleichtern, können auf den in Fig. 1 gezeigten Werkstücktischen Bürsten, Kugeln oder Gleitrollen angebracht sein, die die eigentlichen Werkstückauflageflächen 4, 5 darstellen. Alternativ ist es beispielsweise möglich, zur Bewegung oder zur Unterstützung der Bewegung des Werkstücks 2 in X-Richtung die Werkstückauflageflächen 4, 5 selbst als Bewegungseinrichtung auszugestalten, beispielsweise in Form eines (umlaufenden) Förderbandes, wie dies in der DE 10 2011 051 170 A1 der Anmelderin beschrieben ist, oder in Form einer Werkstückauflage, wie sie in der JP 06170469 beschrieben ist.

Zwischen den beiden fest stehenden Werkstückauflageflächen 4, 5 ist ein Spalt 6 gebildet, der unter einem Winkel α_{Y} zur Y-Richtung ausgerichtet ist, wie insbesondere in Fig. 1b zu erkennen ist. Der Spalt 6 wird seitlich von zwei einander gegenüber liegenden, im gezeigten Beispiel parallel ausgerichteten Seitenkanten 4a, 5a der fest stehenden Werkstückauflageflächen 4, 5 begrenzt. Der Spalt 6 erstreckt sich in einer zweiten Richtung (im Folgenden: Y-Richtung) über die gesamte Breite der beiden Werkstückauflageflächen 4, 5. Ein Laserschneidkopf 9, der den Laserstrahl 3 auf das Werkstück 2 ausrichtet und fokussiert, ist mittels eines als Bewegungseinrichtung dienenden angetriebenen Schlittens 11, der an einem fest stehenden Portal 10 geführt ist, in Y-Richtung gesteuert verfahrbar. Der Laserschneidkopf 9 ist im gezeigten Beispiel zusätzlich auch in X-Richtung verfahrbar und kann mit Hilfe einer an dem Schlitten 11 angebrachten zusätzlichen Bewegungseinrichtung 12, beispielsweise in Form eines Linearantriebs, in X-Richtung gesteuert verfahren werden. Der maximale Verfahrweg des Laserschneidkopfs 9 entspricht der Erstreckung des Spalts 6 in X-Richtung. Wie in Fig. 1b zu erkennen ist, ist diese Erstreckung aufgrund der Ausrichtung des Spalts 6 unter dem Winkel α_{Y} zur Y-Richtung größer als die Breite b des Spalts 6.

Mit Hilfe der aufeinander aufbauenden Bewegungseinrichtungen 11, 12 kann der Laserschneidkopf 9 sowohl in X-Richtung als auch in Y-Richtung an einer gewünschten Schneidkopfposition X_{S}, Y_{S} innerhalb des Spalts 6 positioniert werden. Gegebenenfalls kann der Laserschneidkopf 9 auch entlang einer dritten Bewegungsrichtung Z (Schwerkraftrichtung, im Folgenden: Z-Richtung) verschoben werden, um den Abstand zwischen einer Bearbeitungsdüse 9a des Laserschneidkopfs 9 und der Werkstückoberfläche einzustellen.

Wie in Fig. 1a zu erkennen ist, tritt der Laserstrahl 3 zwischen den beiden den Spalt 6 seitlich begrenzenden Seitenkanten 4a, 5a der fest stehenden Werkstückauflageflächen 4, 5 hindurch, um das Werkstück 2 schneidend zu bearbeiten. Wie ebenfalls in Fig. 1a,b zu erkennen ist, weist das plattenförmige Werkstück 2 (Blech) üblicher Weise eine rechteckige Geometrie auf und die Außenkanten des Werkstücks 2 verlaufen parallel bzw. rechtwinklig zur X-Richtung. Auch ein Großteil der von dem Werkstück 2 freigeschnittenen Werkstückteile weist üblicher Weise ungefähr rechtwinklige Außenmaße sowie - falls vorhanden - Innenkonturen auf, die im 0°- oder im 90°-Winkel zu den Außenkanten des Werkstücks 2 ausgerichtet sind.

Die Verdrehung des Spalts 6 relativ zur X- und Y-Richtung und somit zu den Außenkanten des Werkstücks 2, d.h. in Relation zur üblichen Teilelage, reduziert die Auftrittswahrscheinlichkeit von in den Spalt 6 hinein hängenden Blechzungen erheblich, da lediglich längliche, schmale Konturbereiche von Werkstückteilen, die sich parallel zur Richtung des Spalts 6 erstrecken, d.h. deren Längsseite im Wesentlichen unter dem Winkel α_{Y} zur Y-Richtung verläuft, bezüglich eines Hineinhängens in den Spalt 6 gefährdet sind. Es ist für die Unterstützung des Werkstücks 2 bzw. von Werkstückteilen, die von dem Werkstück 2 beim schneidenden Bearbeiten freigeschnitten werden, somit günstig, wenn die beiden Seitenkanten 4a, 5a der fest stehenden Werkstückauflageflächen 4, 5 unter einem Winkel α_{Y} zur Y-Richtung, d.h. weder senkrecht noch parallel zur Y-Richtung, ausgerichtet sind. Der Winkel α_{Y}, den die Seitenkanten 4a, 5a der fest stehenden Werkstückauflageflächen 4, 5 mit der Y-Richtung einschließen, liegt vorzugsweise zwischen 0° und 45°, besonders bevorzugt zwischen 20° und 40°, insbesondere zwischen 25° und 35°.

In dem in Fig. 1a,b gezeigten Spalt 6 können zur zusätzlichen Unterstützung des Werkstücks 2, genauer gesagt zur Unterstützung von beim trennenden Bearbeiten geschnittenen Werkstückteilen, zwei Unterstützungsschlitten 13a, 13b angeordnet sein, wie dies in Fig. 2 dargestellt ist. Die beiden Unterstützungsschlitten 13a, 13b erstrecken sich jeweils über die gesamte Breite b des Spalts 6 und sind in dem Spalt 6 in einer Verschiebe-Richtung R, die unter dem Winkel α_{Y} zur Y-Richtung verläuft, gesteuert unabhängig voneinander verfahrbar. Die gesteuerte Bewegung der Unterstützungsschlitten 13a, 13b zwischen den Seitenkanten 4a, 5a der fest stehenden Werkstückauflageflächen 4, 5 kann beispielsweise mit Hilfe von Spindelantrieben erfolgen, wobei die Spindelmutter an dem jeweiligen Unterstützungsschlitten 13a, 13b angebracht ist und die Spindel sowie der Antriebsmotor an einer der beiden fest stehenden Werkstückauflagen 4, 5 angebracht sind. Es versteht sich, dass die gesteuerte Bewegung der Unterstützungsschlitten 13a, 13b auch auf andere Weise realisiert werden kann.

Die Unterstützungsschlitten 13a, 13b können in dem Spalt 6 jeweils an eine gewünschte Position R_{UA}, R_{UB} entlang der Verschiebe-Richtung R bewegt werden, um dort das Werkstück 2, genauer gesagt von dem Werkstück 2 freizuschneidende bzw. beim Bearbeiten geschnittene Werkstückteile, mittels einer an dem jeweiligen Unterstützungsschlitten 13a, 13b angebrachten Werkstückauflagefläche 14a, 14b zu unterstützen. Die Werkstückauflagefläche 14a, 14b eines jeweiligen Unterstützungsschlittens 13a, 13b schließt im gezeigten Fall in Z-Richtung bündig mit den Werkstückauflageflächen 4, 5 ab, d.h. die Werkstückauflageflächen 14a, 14b der Unterstützungsschlitten 13a, 13b befinden sich in der Auflageebene E für das Werkstück 2 (vgl. Fig. 1a). Bei dem in Fig. 2 gezeigten Beispiel einer Maschine 1 zum trennenden Bearbeiten ist zwischen den beweglichen Werkstückauflageflächen 14a, 14b der beiden Unterstützungsschlitten 13a, 13b und den Seitenkanten 4a, 5a der beiden fest stehenden Werkstückauflageflächen 4, 5 der Spalt 6 gebildet, durch den der Laserstrahl 3 hindurch tritt.

Zur Steuerung der schneidenden Bearbeitung weist die Maschine 1 eine Steuerungseinrichtung 15 auf, die zur Koordinierung der Bewegungen des Werkstücks 2, des Laserschneidkopfs 9 sowie der Unterstützungsschlitten 13a, 13b dient, um eine gewünschte Werkstückposition X_{W}, eine gewünschte Schneidkopfposition X_{S}, Y_{S} sowie eine gewünschte Position R_{UA}, R_{UB} der Unterstützungsschlitten 13a, 13b einzustellen, um das Schneiden einer vorgegebenen Schnittkontur zu ermöglichen und das Werkstück falls erforderlich in der Nähe des Spalts 6 zu unterstützen.

Die Bewegung der Unterstützungsschlitten 13a, 13b kann synchron erfolgen, d.h. der Abstand zwischen der Position R_{UA} des ersten Unterstützungsschlittens 13a und der Position R_{UB} des zweiten Unterstützungsschlittens in der Verschiebe-Richtung R ist während der Bewegung konstant. Die Bewegung des ersten Unterstützungsschlittens 13a kann auch unabhängig von der Bewegung des zweiten Unterstützungsschlittens 13b erfolgen, d.h. der Abstand zwischen der Position R_{UA} des ersten Unterstützungsschlittens 13a und der Position R_{UB} des zweiten Unterstützungsschlittens 13b in der Verschiebe-Richtung R verändert sich während der Bewegung entlang der Verschiebe-Richtung R.

Durch die Ausrichtung der beiden Seitenkanten 4a, 5a der fest stehenden Werkstückauflageflächen 4, 5 unter dem Winkel α_{Y} zur Y-Richtung ist der Spalt 6 gegenüber der Lage des Werkstücks 2 in der XY-Ebene verdreht. Die den Spalt 6 begrenzenden, einander gegenüber liegenden Seitenkanten 16a, 16b der beiden Unterstützungsschlitten 13a, 13b verlaufen daher auch bei der in Fig. 2 gezeigten quadratischen Geometrie der beiden Unterstützungsschlitten 13a, 13b bzw. von deren Werkstückauflageflächen 14a, 14b schräg zu den Außenkanten des Werkstücks 2.

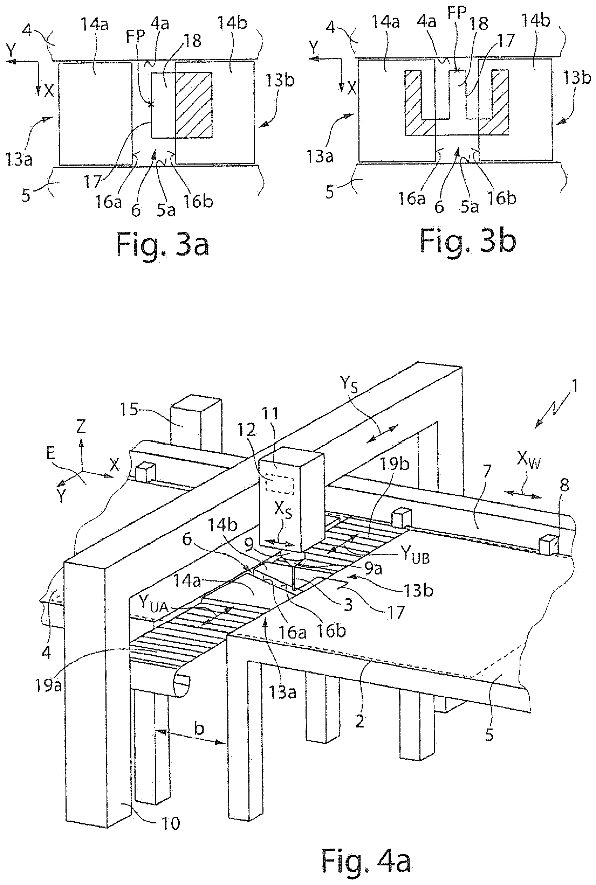

Fig. 3a zeigt demgegenüber den Fall, dass die beiden fest stehenden Werkstückauflageflächen 4, 5, bzw. deren einander zugewandte Seitenkanten 4a, 5a, parallel zur Y-Richtung ausgerichtet sind. Beim Freischneiden eines Werkstückteils 18 entlang seiner Schnittkontur 17, die parallel und rechtwinklig zur X-Richtung verläuft, kann es vorkommen, dass dieses in der Endlage, in der das Werkstückteil 18 an einer Freischneideposition FP vollständig vom Restwerkstück getrennt wird, nur auf der Werkstückauflagefläche 14b eines der beiden Unterstützungsschlitten 13b aufliegt, so dass dieses nur in dem in Fig. 3a schraffiert dargestellten Teilbereich von der Werkstückauflagefläche 14b unterstützt wird. Durch das Einwirken des Schneidgases bzw. durch dessen Druckwirkung im Bereich der Freischneideposition FP besteht für das freigeschnittene Werkstückteil 18 eine Kippgefahr. Außerdem kann sich das Werkstückteil 18 im Bereich der Freischneideposition FP nach unten durchbiegen.

Auch bei dem in Fig. 3b gezeigten Beispiel, bei welchem das freigeschnittene Werkstückteil 18 auf den Werkstückauflageflächen 14a, 14b beider Unterstützungsschlitten 13a, 13b aufliegt, kann es bei der in Fig. 3b gezeigten Kontur 17 des Werkstückteils 18, welches drei sich in X-Richtung erstreckende zungenförmige Teilbereiche aufweist, dazu kommen, das der mittlere zungenförmige Teilbereich, der in dem Spalt 6 angeordnet ist und nicht von den beiden Werkstückauflageflächen 14a, 14b unterstützt wird, sich durchbiegt und hierbei in den Spalt 6 herabhängt. Bei der Verschiebung der Unterstützungsschlitten 13a, 13b kann es in diesem Fall zu einer Kollision mit dem nicht unterstützten zungenförmigen Teilbereich kommen.

Die in Fig. 3a,b gezeigte Ausrichtung der einander zugewandten Seitenkanten 16a, 16b der Werkstückauflageflächen 14a, 14b der beiden Unterstützungsschlitten 13a, 13b parallel zur X-Richtung kann somit bei Werkstückteilen, deren Außenkontur 17 senkrecht bzw. parallel zur X-Richtung ausgerichtet ist, zu Einschränkungen der Prozesssicherheit führen.

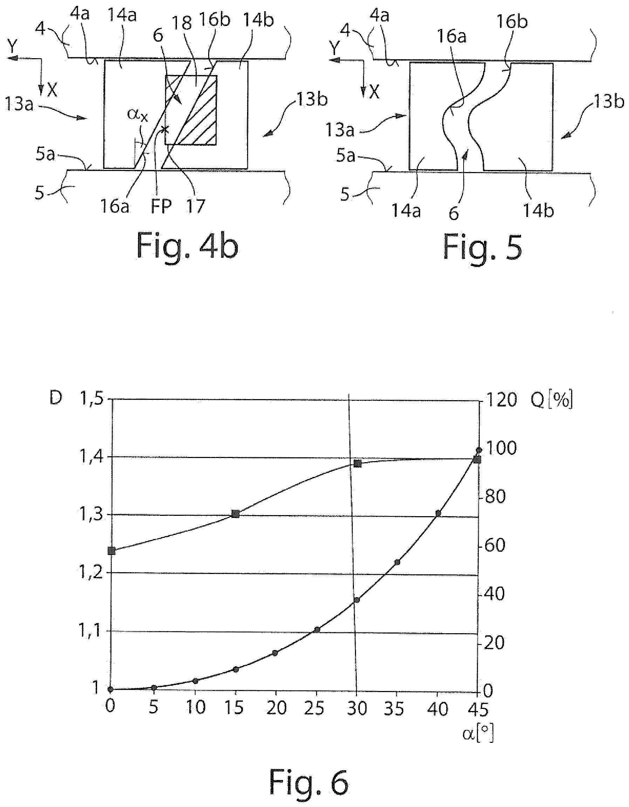

Um diese Probleme zu vermeiden, sind bei der in **Fig. 4a****,****b** gezeigten Maschine 1 die beiden einander zugewandten, parallel ausgerichteten Seitenkanten 16a, 16b der Werkstückauflageflächen 14a, 14b der beiden Unterstützungsschlitten 13a, 13b schräg, d.h. unter einem Winkel αₓ zur X-Richtung, ausgerichtet. Die beiden einander zugewandten Seitenkanten 4a, 5a der fest stehenden Werkstückauflageflächen 4, 5 der Werkstückauflagetische verlaufen bei der in Fig. 4a,

b gezeigten Maschine 1 hingegen wie in Fig. 3a,b parallel zur Y-Richtung, so dass die beiden Unterstützungsschlitten 13a, 13b jeweils an eine gewünschte Position Y_{UA}, Y_{UB} in Y-Richtung bewegt werden können, um das Werkstück 2 bzw. ein freizuschneidendes Werkstückteil 18 zu unterstützen. Die Ansteuerung der Unterstützungsschlitten 13a, 13b sowie der weiteren bewegbaren Bauteile erfolgt mittels der Steuerungseinrichtung 15 auf die weiter oben in Zusammenhang mit Fig. 1a,b beschriebene Weise.

Bei dem in Fig. 4a gezeigten Beispiel ist an den Unterstützungsschlitten 13a, 13b, genauer gesagt an den in X-Richtung verlaufenden, voneinander abgewandten Seitenkanten der Werkstückauflageflächen 14a, 14b, jeweils ein Überdeckungselement 19a, 19b zur Abdeckung des Zwischenraums zwischen den beiden Werkstückauflageflächen 4a, 4b außerhalb des zwischen den Unterstützungsschlitten 13a, 13b gebildeten Spalts 6 angebracht. Die Überdeckungselemente 19a, 19b erstrecken sich über die gesamte Breite b des Spalts 6, werden beim Bewegen der Unterstützungsschlitten 13a, 13b in Y-Richtung mitbewegt und sind im gezeigten Beispiel rolladenförmig ausgebildet. Die Überdeckungselemente 19a, 19b können auch auf andere Weise, z.B. teleskopförmig, schuppenförmig, als aufgerolltes Band, etc. ausgebildet sein. Die Oberseite der Überdeckungselemente 19a, 19b befindet sich auf der Höhe der Werkstückauflageflächen 14a, 14b bzw. der Werkstückauflageflächen 4, 5. Die Überdeckungselemente 19a, 19b dienen zur Auflage von in den Spalt 6 hinein ragenden, nicht biegesteifen Teilbereichen des Restwerkstücks 2, die ohne eine solche Auflage gegebenenfalls mit den Unterstützungsschlitten 13a, 13b kollidieren könnten. Es versteht sich, dass Überdeckungselemente 19a, 19b auch bei dem in Fig. 2 gezeigten Beispiel als Auflagen für überhängende Teilbereiche des Restwerkstücks 2 dienen können.

Wie in Fig. 4b gezeigt ist, kann durch die Ausrichtung der einander gegenüber liegenden Seitenkanten 16a, 16b der Werkstückauflageflächen 14a, 14b der Unterstützungsschlitten 13a, 13b unter einem Winkel αₓ zur X-Richtung im Gegensatz zu dem in Fig. 3a gezeigten Beispiel ein Werkstückteil 18, dessen Außenkanten parallel bzw. rechtwinklig zur X-Richtung bzw. zur Y-Richtung ausgerichtet sind, von den Werkstückauflageflächen 14a, 14b beider Unterstützungsschlitten 13a, 13b unterstützt werden, um auf diese Weise die Prozesssicherheit zu erhöhen.

Bei dem in Fig. 4a,b gezeigten Beispiel ist es aufgrund der unter einem Winkel α_{X} zur X-Richtung ausgerichteten Seitenkanten 16a, 16b der Werkstückauflageflächen 14a, 14b der beiden Unterstützungsschlitten 13a, 13b aber erforderlich, bei einer Bewegung des Bearbeitungskopfs in X-Richtung die Unterstützungsschlitten 13a, 13b in Y-Richtung zu verfahren, damit die Position des zwischen den beiden Unterstützungsschlitten 13a, 13b liegenden Spalts 6 der Bewegung des Laserschneidkopfs 9 folgt. Bei der Ansteuerung der Unterstützungsschlitten 13a, 13b muss daher in transformierter Form die Position des "Tool Center Points" der X-Achsbewegung (Werkstückachse + Zusatzachse in X-Richtung) aufgeprägt werden.

Wie in Fig. 6 anhand der unteren Kurve zu erkennen ist, wird der notwendige Verfahrweg und somit das Verhältnis D der notwendigen Dynamik der Unterstützungsschlitten 13a, 13b zur ursprünglichen Dynamik umso größer, je größer der Winkel αₓ (zwischen 0° und 45°) zwischen den jeweiligen Seitenkanten 16a, 16b der Werkstückauflageflächen 14a, 14b und der X-Richtung ist. Die Prozesssicherheit Q, d.h. die Sicherheit, dass ein beliebig geformtes Werkstückteil 18 beim Schneiden seiner Kontur 17 immer von den Werkstückauflageflächen 14a, 14b beider Unterstützungsschlitten 13a, 13b unterstützt wird, nimmt ebenfalls mit zunehmendem Winkel αₓ zu, wie in Fig. 6 anhand der oberen Kurve (in %) zu erkennen ist. Ein guter Kompromiss zwischen Unterstützungswirkung bzw. Prozesssicherheit Q und benötigter Dynamik D für die Bewegung der Unterstützungsschlitten 13a, 13b in Y-Richtung wird bei einem Winkel αₓ zwischen ca. 20° und 40°, besser zwischen 25° und 35°, idealer Weise bei einem Winkel αₓ von ca. 30° erreicht.

Alternativ zu dem in Fig. 4a,b gezeigten Beispiel, bei dem die beiden einander gegenüber liegenden Seitenkanten 16a, 16b der Unterstützungsschlitten 13a, 13b geradlinig verlaufen, sind bei einem in **Fig. 5** gezeigten Beispiel die beiden einander gegenüber liegenden Seitenkanten 16a, 16b der beiden Unterstützungsschlitten 13a, 13b bogenförmig bzw. geschwungen ausgebildet. Auf diese Weise kann die Parallelität zwischen den einender zugewandten Seitenkanten 16a, 16b der Auflageflächen 14a, 14b der Unterstützungsschlitten 13a, 13b und den Außen- oder Innenkonturen von geschnittenen Werkstückteilen 18 noch weiter reduziert werden, wodurch auch die Gefahr, dass Abschnitte bzw. Segmente dieser Werkstückteile 18 in den Spalt 6 zwischen den beiden Unterstützungsschlitten 13a, 13b herabhängen, weiter reduziert wird.

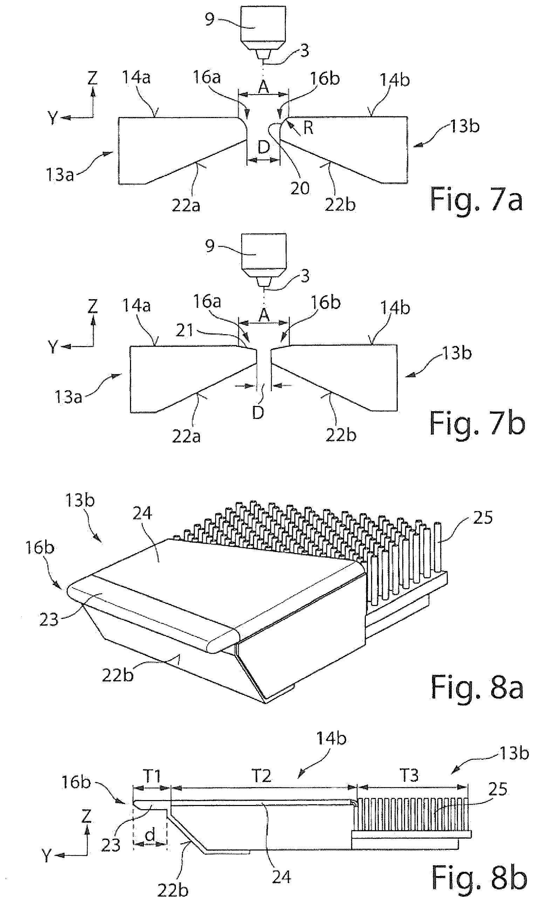

Zur wirksamen Vermeidung von Kollisionen zwischen herabhängenden Abschnitten von Werkstückteilen 18 und den Unterstützungsschlitten 13a, 13b hat es sich als günstig erwiesen, wenn die einander zugewandten Seitenkanten 16a, 16b der beiden Werkstückauflageflächen 14a, 14b der Unterstützungsschlitten 13a, 13b eine Rundung 20 oder eine Fase 21 aufweisen, vgl. **Fig. 7a****,b.** Die in Fig. 7a gezeigte Rundung 20 weist einen Krümmungs-Radius R von ca. 2-5 mm auf. Die in Fig. 7b gezeigte Fase 21 erstreckt sich von der Werkstückauflagefläche 14a, 14b in Z-Richtung um ca. 3 mm nach unten und in Y-Richtung um ca. 4,5 mm bis zur Seitenkante 16a, 16b des jeweiligen Unterstützungsschlittens 13a, 13b. Bei den in Fig. 7a,b gezeigten Beispielen ist ein (minimaler) Abstand D zwischen den beiden Unterstützungsschlitten 13a, 13b, der beispielsweise bei ca. 4-5 mm liegen kann, geringer als ein Abstand A zwischen den planen Werkstückauflageflächen 14a, 14b, der beispielsweise bei ca. 10-12 mm liegen kann.

Um die Anhaftung von Schlacke an einem jeweiligen Unterstützungsschlitten 13a, 13b möglichst gering zu halten, ist es günstig, wenn die Unterstützungsschlitten 13a, 13b sich an ihrer der Werkstückauflagefläche 14a, 14b abgewandten Unterseite 22a, 22b zur jeweiligen Seitenkante 16a, 16b der Werkstückauflagefläche 14a, 14b hin verjüngen bzw. wenn diese einen (schrägen) Rücksprung aufweisen, wie dies in Fig. 7a,b ebenfalls dargestellt ist.

Um die Anhaftung von Schlacke weiter zu reduzieren, ist es ebenfalls günstig, wenn die Seitenkante 16b eines jeweiligen Unterstützungsschlittens 13b aus Kupfer gebildet ist, da dieses Material eine gute thermische Leitfähigkeit aufweist und die beim Schneiden von Stahl und Aluminium gebildete Schlacke an Kupfer nicht gut haftet. Um die Seitenkante 16a, 16b eines der Unterstützungsschlitten 13a, 13b aus Kupfer als Material herzustellen, bestehen mehrere Möglichkeiten. Bei dem in **Fig. 8a,b** gezeigten Beispiel ist an dem (zweiten) Unterstützungsschlitten 13b ein Kupferblech 23 angebracht, welches an dem Unterstützungsschlitten 13b lösbar, z.B. über eine Schraubverbindung, befestigt ist und falls erforderlich ausgetauscht werden kann.

Bei dem in Fig. 8a,b gezeigten Beispiel ist die Werkstückauflagefläche 14b des Unterstützungsschlittens 13b dreigeteilt und weist einen ersten, plattenförmigen Teilbereich T1 auf, an dem die Seitenkante 16b gebildet ist und welcher einen oberen Abschnitt des Kupferblechs 23 bildet. An den plattenförmigen ersten Teilbereich T1 schließt sich ein zweiter Teilbereich T2 an, der im gezeigten Beispiel in Form eines Riffelblechs 24 ausgebildet ist, welches einen stabile Werkstückauflage ermöglicht und welches gute Gleiteigenschaften aufweist. An das Riffelblech 24 schließt sich in Y-Richtung unmittelbar ein dritter Teilbereich T3 der Werkstückauflagefläche 14b an, der als Bürstenauflage 25 ausgebildet ist und der eine Mehrzahl von Bürsten aufweist, die flexibel sind und die ein Gleiten von auf der Werkstückauflagefläche 14b aufliegenden Werkstücken 2 erleichtern.

Der plattenförmige erste Teilbereich T1 ermöglicht es, die sich verjüngende Unterseite 22b des Unterstützungsschlittens 13b von der Seitenkante 16b der Werkstückauflagefläche 14b um eine Distanz d zu versetzen, wodurch die Anhaftung von Schlacke an dem Unterstützungsschlitten 13b bzw. an dem Kupferblech 23 reduziert werden kann. Es versteht sich, dass auch der erste Unterstützungsschlitten 13a auf die in Fig. 8a,b gezeigte Weise ausgebildet sein kann. Durch den zweiten Teilbereich T2 vergrößert sich der Abstand zwischen der Seitenkante 16b und der Bürstenauflage 25 zusätzlich, um eine Beschädigung der Bürsten durch Funkenflug zu verhindern.

Zusammenfassend kann durch die weder parallele noch senkrechte Ausrichtung von mindestens zwei den Spalt 6 begrenzenden Seitenkanten 4a, 5a bzw. 16a, 16b der jeweiligen Werkstückauflageflächen 4, 5 bzw. 14a, 14b zu den Außenkanten des Werkstücks 2 bzw. zur X-Richtung während der schneidenden Bearbeitung, insbesondere beim Freischneiden, eine verbesserte, flächige Unterstützung von Werkstückteilen 18 erfolgen.

## Patentansprüche

1. Maschine (1) zum trennenden Bearbeiten eines plattenförmigen Werkstücks (2) mittels eines Bearbeitungsstrahls (3), mit:
einer ersten Bewegungseinrichtung (7) zur Bewegung des Werkstücks (2) in einer ersten Richtung (X),
einer zweiten Bewegungseinrichtung (11) zur Bewegung eines den Bearbeitungsstrahl (3) auf das Werkstück (2) ausrichtenden Bearbeitungskopfs (9) entlang einer zweiten Richtung (Y), sowie
zwei fest stehende Werkstückauflageflächen (4, 5) zur Auflage des Werkstücks (2), zwischen denen ein Spalt (6) für den Durchtritt des Bearbeitungsstrahls (3) gebildet ist,
**dadurch gekennzeichnet,**
**dass** zwischen den zwei fest stehenden Werkstückauflageflächen (4, 5) mindestens zwei verfahrbare Unterstützungsschlitten (13a, 13b) angeordnet sind, die jeweils eine Werkstückauflagefläche (14a, 14b) zur Unterstützung von beim trennenden Bearbeiten geschnittenen Werkstückteilen (18) aufweisen, und dass die einander gegenüber liegenden, einander zugewandten Seitenkanten (16a, 16b) der Werkstückauflageflächen (14a, 14b) der Unterstützungsschlitten (13a, 13b) nicht rechtwinklig und nicht parallel zur ersten Richtung (X) ausgerichtet sind.

2. Maschine nach Anspruch 1, bei der die einander gegenüber liegenden Seitenkanten (4a, 5a) an den zwei fest stehenden Werkstückauflageflächen (4, 5) nicht rechtwinklig und nicht parallel zur ersten Richtung (X) ausgerichtet sind.

3. Maschine nach Anspruch 2, bei der die Seitenkanten (4a, 5a) der zwei fest stehenden Werkstückauflageflächen (4, 5) unter einem Winkel (α_{Y}) zur zweiten Richtung (Y) ausgerichtet sind.

4. Maschine nach einem der vorhergehenden Ansprüche, die eine zusätzliche Bewegungseinrichtung (12) zur Bewegung des Bearbeitungskopfs (9) in der ersten Richtung (X) aufweist.

5. Maschine nach Anspruch 1, bei der die Seitenkanten (4a, 5a) der zwei fest stehenden Werkstückauflageflächen (4, 5) rechtwinklig zur ersten Richtung (X) ausgerichtet sind.

6. Maschine nach einem der vorhergehenden Ansprüche, bei der die einander gegenüber liegenden Seitenkanten (16a, 16b) der Werkstückauflageflächen (14a, 14b) der beiden Unterstützungsschlitten (13a, 13b) geradlinig und unter einem Winkel (αₓ) zur ersten Richtung (X) verlaufen.

7. Maschine nach Anspruch 6, bei der die Seitenkanten (16a, 16b) der Werkstückauflageflächen (14a, 14b) der beiden Unterstützungsschlitten (13a, 13b) unter einem Winkel (αₓ) zwischen 20° und 40° zur ersten Richtung (X) verlaufen.

8. Maschine nach einem der Ansprüche 1 bis 6, bei welcher die einander gegenüber liegenden Seitenkanten (16a, 16b) der Werkstückauflageflächen (14a, 14b) der beiden Unterstützungsschlitten (13a, 13b) bogenförmig verlaufen.

9. Maschine nach einem der vorhergehenden Ansprüche, bei der mindestens eine der einander gegenüber liegenden Seitenkanten (16a, 16b) der Werkstückauflageflächen (14a, 14b) der Unterstützungsschlitten (13a, 13b) eine Fase (20) oder eine Rundung (21) aufweist.

10. Maschine nach einem der vorhergehenden Ansprüche, bei der mindestens ein Unterstützungsschlitten (13a, 13b) sich an seiner der Werkstückauflagefläche (14a, 14b) abgewandten Unterseite (22a, 22b) zur Seitenkante (16a, 16b) der Werkstückauflagefläche (14a, 14b) hin verjüngt.

11. Maschine nach einem der vorhergehenden Ansprüche, bei der die Werkstückauflagefläche (14a, 14b) mindestens eines Unterstützungsschlittens (13a, 13b) an der Seitenkante (16a, 16b) der Werkstückauflagefläche (14a, 14b) aus einem metallischen Material, insbesondere aus Kupfer, gebildet ist.

12. Maschine nach einem der vorhergehenden Ansprüche, bei der die Werkstückauflagefläche (14b) mindestens eines Unterstützungsschlittens (13b) einen plattenförmigen Teilbereich (T1) aufweist, an dem die Seitenkante (16b) der Werkstückauflagefläche (14b) gebildet ist.

13. Maschine nach einem der vorhergehenden Ansprüche, bei der die Werkstückauflagefläche (14b) des mindestens einen Unterstützungsschlittens (13b) einen Teilbereich (T2) aufweist, der als Riffelblech (24) ausgebildet ist.

14. Maschine nach einem der vorhergehenden Ansprüche, weiter umfassend: eine Steuerungseinrichtung (15), die ausgebildet ist, mindestens einen, insbesondere zwei, der Unterstützungsschlitten (13a, 13b) unter einem beim trennenden Bearbeiten freizuschneidenden Werkstückteil (18) zu positionieren.

## Claims

1. A machine (1) for the separative machining of a plate-shaped workpiece (2) by means of a machining beam (3), having:
a first movement device (7) for moving the workpiece (2) in a first direction (X),
a second movement device (11) for moving a machining head (9), which directs the machining beam (3) onto the workpiece (2), along a second direction (Y), and
two stationary workpiece bearing faces (4, 5) for bearing the workpiece (2), between which workpiece bearing faces there is formed a gap (6) for the passage of the machining beam (3),
**characterized**
**in that** at least two movable support carriages (13a, 13b) are arranged between the two stationary workpiece bearing faces (4, 5), which support carriages have in each case one workpiece bearing face (14a, 14b) for supporting workpiece parts (18) which are cut during the cutting machining process, and in that those side edges (16a, 16b) of the workpiece bearing faces (14a, 14b) of the support carriages (13a, 13b) which face toward one another are oriented non-perpendicularly and non-parallel with respect to the first direction (X).

2. The machine as claimed in claim 1, in which the mutually facing side edges (4a, 5a) are oriented non-perpendicularly and non-parallel with respect to the first direction (X) on the two stationary workpiece bearing faces (4, 5).

3. The machine as claimed in claim 2, in which the side edges (4a, 5a) of the two stationary workpiece bearing faces (4, 5) are oriented at an angle (α_{Y}) with respect to the second direction (Y).

4. The machine as claimed in one of the preceding claims, which has an additional movement device (12) for moving the machining head (9) in the first direction (X).

5. The machine as claimed in claim 1, in which the side edges (4a, 5a) of the two stationary workpiece bearing faces (4, 5) are oriented perpendicularly with respect to the first direction (X).

6. The machine as claimed in one of the preceding claims, in which the mutually facing side edges (16a, 16b) of the workpiece bearing faces (14a, 14b) of the two support carriages (13a, 13b) run rectilinearly and at an angle (α_{X}) with respect to the first direction (X).

7. The machine as claimed in claim 6, in which the side edges (16a, 16b) of the workpiece bearing faces (14a, 14b) of the two support carriages (13a, 13b) run at an angle (αₓ) of between 20° and 40° with respect to the first direction (X).

8. The machine as claimed in one of the claims 1 to 6, in which the mutually facing side edges (16a, 16b) of the workpiece bearing faces (14a, 14b) of the two support carriages (13a, 13b) run in arcuate fashion.

9. The machine as claimed in one of the preceding claims, in which at least one of the mutually facing side edges (16a, 16b) of the workpiece bearing faces (14a, 14b) of the support carriages (13a, 13b) has a bevel (20) or a rounding (21).

10. The machine as claimed in one of the preceding claims, in which at least one support carriage (13a, 13b), on its bottom side (22a, 22b) averted from the workpiece bearing face (14a, 14b), tapers toward the side edge (16a, 16b) of the workpiece bearing face (14a, 14b).

11. The machine as claimed in one of the preceding claims, in which the workpiece bearing face (14a, 14b) of at least one support carriage (13a, 13b) is formed, at the side edge (16a, 16b) of the workpiece bearing face (14a, 14b), from a metallic material, in particular from copper.

12. The machine as claimed in one of the preceding claims, in which the workpiece bearing face (14b) of at least one support carriage (13b) has a plate-shaped subregion (T1) on which the side edge (16b) of the workpiece bearing face (14b) is formed.

13. The machine as claimed in one of the preceding claims, in which the workpiece bearing face (14b) of the at least one support carriage (13b) has a subregion (T2) in the form of a corrugated sheet (24).

14. The machine as claimed in one of the preceding claims, further comprising: a control device (15) which is designed to position at least one, in particular two, of the support carriages (13a, 13b) under a workpiece part (18) which is to be cut off during the separative machining.

## Revendications

1. Machine (1) pour l'usinage de séparation d'une pièce (2) en forme de plaque au moyen d'un faisceau d'usinage (3), avec :
un premier dispositif de déplacement (7) pour déplacer la pièce (2) dans une première direction (X),
un deuxième dispositif de déplacement (11) pour déplacer, le long d'une deuxième direction (Y), une tête d'usinage (9) orientant le faisceau d'usinage (3) vers la pièce (2), et
deux surfaces d'appui de pièce fixes (4, 5) pour l'appui de la pièce (2), entre lesquelles est formé un interstice (6) pour le passage du faisceau d'usinage (3),
**caractérisée en ce qu'**au moins deux chariots de soutien mobiles (13a, 13b) sont disposés entre les deux surfaces d'appui de pièce fixes (4, 5), chariots qui présentent chacun une surface d'appui de pièce (14a, 14b) pour l'usinage de parties de pièce (18) coupées lors de l'usinage de séparation, et **en ce que** les bords latéraux en vis-à-vis (16a, 16b), tournés l'un vers l'autre, des surfaces d'appui de pièce (14a, 14b) des chariots de soutien (13a, 13b) sont orientés de manière non perpendiculaire et non parallèle à la première direction (X).

2. Machine selon la revendication 1, dans laquelle les bords latéraux en vis-à-vis (4a, 5a) sur les deux surfaces d'appui de pièce fixes (4, 5) sont orientés de manière non perpendiculaire et non parallèle à la première direction (X).

3. Machine selon la revendication 2, dans laquelle les bords latéraux (4a, 5a) des deux surfaces d'appui de pièce fixes (4, 5) sont orientés sous un angle (α_{γ}) par rapport à la deuxième direction (Y).

4. Machine selon l'une des revendications précédentes, qui présente un dispositif de déplacement supplémentaire (12) pour le déplacement de la tête d'usinage (9) dans la première direction (X).

5. Machine selon la revendication 1, dans laquelle les bords latéraux (4a, 5a) des deux surfaces d'appui de pièce fixes (4, 5) sont orientés perpendiculairement à la première direction (X).

6. Machine selon l'une des revendications précédentes, dans laquelle les bords latéraux en vis-à-vis (16a, 16b) des surfaces d'appui de pièce (14a, 14b) des deux chariots de soutien (13a, 13b) s'étendent de manière rectiligne et sous un angle (α_{X}) par rapport à la première direction (X).

7. Machine selon la revendication 6, dans laquelle les bords latéraux (16a, 16b) des surfaces d'appui de pièce (14a, 14b) des deux chariots de soutien (13a, 13b) s'étendent sous un angle (α_{X}) compris entre 20° et 40° par rapport à la première direction (X).

8. Machine selon l'une des revendications 1 à 6, dans laquelle les bords latéraux en vis-à-vis (16a, 16b) des surfaces d'appui de pièce (14a, 14b) des deux chariots de soutien (13a, 13b) s'étendent de manière cintrée.

9. Machine selon l'une des revendications précédentes, dans laquelle au moins un des bords latéraux en vis-à-vis (16a, 16b) des surfaces d'appui de pièce (14a, 14b) des chariots de soutien (13a, 13b) présente un chanfrein (20) ou un arrondi (21).

10. Machine selon l'une des revendications précédentes, dans laquelle au moins un chariot de soutien (13a, 13b) se rétrécit, sur son côté inférieur (22a, 22b) opposé à la surface d'appui de pièce (14a, 14b), en direction du bord latéral (16a, 16b) de la surface d'appui de pièce (14a, 14b).

11. Machine selon l'une des revendications précédentes, dans laquelle la surface d'appui de pièce (14a, 14b) d'au moins un chariot de soutien (13a, 13b) est formée, sur le bord latéral (16a, 16b) de la surface d'appui de pièce (14a, 14b), d'un matériau métallique, en particulier de cuivre.

12. Machine selon l'une des revendications précédentes, dans laquelle la surface d'appui de pièce (14b) d'au moins un chariot de soutien (13b) présente une région partielle (T1) en forme de plaque sur laquelle est formé le bord latéral (16b) de la surface d'appui de pièce (14b).

13. Machine selon l'une des revendications précédentes, dans laquelle la surface d'appui de pièce (14b) du chariot de soutien au moins unique (13b) présente une région partielle (T2) qui est réalisée sous la forme d'une tôle ondulée (24).

14. Machine selon l'une des revendications précédentes, comprenant en outre : un dispositif de commande (15) qui est conçu pour positionner au moins un et en particulier deux des chariots de soutien (13a, 13b) sous une partie de pièce (18) à dégager par découpage lors de l'usinage de séparation.
